# EUROPÄISCHE PATENTSCHRIFT

(11) **EP 1 341 389 B1**
(45) Veröffentlichungstag und Bekanntmachung des Hinweises auf die Patenterteilung: **12.10.2005**
(21) Anmeldenummer: 03100361.9
(22) Anmeldetag: 17.02.2003
(51) Int. Cl.: H04Q 3/00

(54) **Verfahren zur Sicherung von Kontrollanforderungen bei Kommunikationsverbindungen**
Method for control requests security in communications connections
Méthode pour le sécurisation de requêtes de contrôle dans des connections de communication

(30) Priorität: 28.02.2002 DE 10208746
(43) Veröffentlichungstag der Anmeldung: 03.09.2003
(73) Patentinhaber: SIEMENS AKTIENGESELLSCHAFT, 80333 München (DE)
(72) Erfinder: Fischer, Jörg-Axel, 85635, Höhenkirchen-Siegertsbrunn (DE); Gundlach, Michael, 81739, München (DE)

(56) Entgegenhaltungen:
- EP-A- 0 912 069
- EP-A- 1 058 463

## Beschreibung

Die Erfindung betrifft ein Verfahren zur Sicherung von Kontrollanforderungen in Kommunikationsnetzwerken nach dem Oberbegriff des Anspruchs 1.

Bei Verfahren zur Kontrolle von Endgeräten in Kommunikationsnetzen, die nach dem derzeitigen Stand der Technik angewendet werden, werden von einem in einer Vermittlungsstelle lokalisierten Dienstverteilerknoten Ereignisdaten des kontrollierten Endgerätes an einen Dienststeuerknoten übertragen. Diese werden anschließend an ein Kontrollterminal übermittelt und dort protokolliert und ausgewertet. Dieses Überwachungsverfahren wird insbesondere in intelligenten Netzen angewendet.

Die diesem Kontrollverfahren zugrundeliegende Architektur aus Dienstverteilerknoten und Dienststeuerknoten beschränkt jedoch die Wirksamkeit und den Umfang von Überwachungsmöglichkeiten eines zu kontrollierenden Endgerätes stark.

So werden insbesondere Rufnummern- oder dergleichen andere Eingaben von Netzadressen, die am kontrollierten Endgerät erfolgen, von einer derartigen Architektur unvollständig vom Dienstverteilerknoten an den Dienststeuerknoten übertragen.

Dafür bestehen im wesentlichen zwei Gründe. Zum einen müssen Leistungsressourcen der Netzwerkarchitektur aus Performancegründen in einer optimalen und rationellen Weise ausgeschöpft werden. Zum anderen ist für einige durch den Dienststeuerknoten auszuführende oder zu verwaltende Dienste keine vollständige Rufnummernübermittlung zwischen Dienstverteilerknoten und Dienststeuerknoten erforderlich und unterbleibt somit.

In intelligenten Netzen ist dies beispielsweise für einen Dienst zur Verwaltung und Sicherung von Halbamtsberechtigungen (Indirect Access Service, IAS) oder bei Virtuellen Privaten Netzen (Virtual Privat Network, VPN) der Fall. Bei diesen Netzwerkdiensten werden an den Endgeräten eingegebene Rufnummern stets nur in einer begrenzten Stellenanzahl vom Dienstverteilerknoten an den Dienststeuerknoten übertragen, wodurch an diesem nicht eindeutig feststellbar ist, mit welchen Endgeräten Kommunikationsvorgänge initiiert wurden.

Es besteht die Aufgabe, ein Verfahren zur Sicherung von Kontrollanforderungen eines zu kontrollierenden Endgerätes in einem Kommunikationsnetzwerk, insbesondere in einem intelligente Netz, anzugeben, welches eine vollständige Erfüllung der bestehenden gewährleistet. Das Verfahren soll in eine bereits vorhandene Netzwerkarchitektur in einfacher Weise zu implementieren sein, ohne die Leistungsfähigkeit der bestehenden Architektur wesentlich zu beeinflussen.

Die Aufgabe wird mit einem Verfahren nach Anspruch 1 gelöst, wobei alle nachfolgenden Unteransprüche zweckmäßige Ausgestaltungen des Hauptanspruches beinhalten.

Bei dem hier beschriebenen erfindungsgemäßen Verfahren werden bei einer vom Dienstverteilerknoten an den Dienststeuerknoten unvollständig ausgeführten Übermittlung von am kontrollierten Endgerät eingegebenen Verbindungsdaten Vervollständigungsoperationen zwischen Dienststeuerknoten und Dienstverteilerknoten ausgeführt.

Der Dienstverteilerknoten detektiert am kontrollierten Endgerät erfolgte Eingaben von Verbindungsdaten und übermittelt diese an den Dienststeuerknoten. Das kontrollierte Endgerät ist innerhalb des Dienststeuerknotens als zu überwachendes Endgerät ausgewiesen. Dadurch ist der Überwachungsvorgang selektiv auf das betreffende Endgerät begrenzt. Wird durch den Dienststeuerknoten ein Zugriff auf das überwachte und markierte Endgerät registriert und sind die Zugriffsdaten unvollständig übermittelt worden, erfolgt eine Rückmeldung des Dienststeuerknotens an den Dienstverteilerknoten. Innerhalb dessen werden die Zugriffsdaten vervollständigt und als vollständiger Datensatz an den Dienststeuerknoten übermittelt. Innerhalb des Dienststeuerknotens liegen als Ergebnis der Vervollständigungsoperation vollständige, am kontrollierten Endgerät eingegebene Verbindungsdaten vor, die an ein Kontrollterminal weitergeleitet werden.

Das Zusammenwirken von Dienststeuerknoten und Dienstverteilerknoten wird innerhalb einer bereits bestehenden Netzwerkarchitektur so gestaltet, daß ohne eine Änderung der Architektur eine umfassende und vollständige Kontrolle eines Endgerätes innerhalb der Netzwerkstruktur möglich ist.

Dieses Verfahren ist insbesondere für intelligente Netze geeignet. In einer Standardkonfiguration einer Architektur dieses Netzwerktyps, etwa einem GSM-Mobilfunknetz, sind der Dienststeuerknoten als ein SCP (Service Control Point) und der Dienstverteilerknoten als ein SSP (Service Switching Point) ausgebildet.

Die kontrollierten Verbindungsdaten umfassen insbesondere am kontrollierten Endgerät eingegebene Rufnummern oder dergleichen weitere Netzadressen. Diese bilden eine Schlüsselinformation, die zur Kontrolle von Kommunikationsvorgängen an Endgeräten von zentraler Bedeutung sind.

Bei einer ersten Ausführungsform des erfindungsgemäßen Verfahrens sind alle Netzanschlußdaten sämtlicher Endgeräte in dem Kommunikationsnetz bereits vorab innerhalb des Dienststeuerknotens in einer diesem zugeordneten Datenbank gespeichert. Eine Markierung des zu kontrollierenden Endgerätes erfolgt in der Datenbank des Dienststeuerknotens, indem ein den Kontrollvorgang steuernder Satz von Überwachungsparametern zum Netzanschlußdatum des kontrollierten Endgerätes hinzugefügt und mit einem Wert belegt wird. Das Endgerät ist durch Angabe seiner Netzanschlussdaten in Verbindung mit den gesetzten Überwachungsparametern als ein kontrolliertes Endgerät ausgewiesen.

Ist der Dienststeuerknoten innerhalb der vorhandenen Netzwerkarchitektur so vorkonfiguriert, daß keine Netzanschlußdaten von Endgeräten des Kommunikationsnetzes gespeichert sind, erfolgt eine temporäre Abspeicherung der Netzanschlußdaten des kontrollierten Endgerätes. Dies erfolgt durch einen Speichervorgang in einer bereits innerhalb des Dienststeuerknotens bestehenden Datenbankstruktur oder durch Einrichtung einer temporären Kontrolldatenbank. Die temporäre Kontrolldatenbank wird ausschließlich zur Durchführung der Kontrollaufgaben erstellt und nach deren Abschluß gelöscht.

Die temporäre Markierung und/oder Speicherung der Netzanschlußdaten kann Informationen über den Umfang der Kontrollaufgaben enthalten. So ist es insbesondere möglich, selektiv den Umfang der am kontrollierten Endgerät aktivierten Netzdienste zu ermitteln, bzw. die Aktivierung bestimmter Netzdienste in eindeutiger Weise dem kontrollierten Endgerät zuzuordnen bzw. deren Aktivierung festzustellen.

Ist der Dienststeuerknoten Bestandteil einer übergeordneten administrierten Architektur zur Dienststeuerung oder wird ein einzelner Dienststeuerknoten von einem Dienstverwaltungsknoten administriert, erfolgt die Markierung der Netzanschlußdaten des kontrollierten Endgerätes durch am des Dienstverwaltungsknoten ausgeführte Administrationsprozeduren.

Dies ist vor allem dann zweckmäßig, wenn mehrere kontrollierte Endgeräte im Netzwerk vorhanden sind und daher erwartungsgemäß eine direkte Administration zu markierender Netzanschlußdaten am Dienststeuerknoten zu erheblichen Einbußen an Leistungsfähigkeit des Dienststeuerknotens führt. Mit dieser Ausgestaltung werden die Kontrollabläufe von deren Administration getrennt ausgeführt wobei der Dienststeuerknoten unabhängig von ausgeführten Administrationsprozeduren in vollständigem Umfang ohne Leistungseinbußen funktionsfähig bleibt.

Darüber hinaus kann eine Zentralisierung der Administration von Überwachungs- und Kontrollaufgaben im Netzwerk erfolgen.

Beide Markierungs- und/oder Speicherprozeduren erfolgen unabhängig von der konkreten Ausgestaltung der Dienststeuerung im Netz und ohne eine funktionelle Mitwirkung des zu kontrollierten Endgerätes und sind somit am entsprechenden Endgerät aus nicht feststellbar.

Wird ein Kommunikationsvorgang am kontrollierten Endgerät gestartet, wird dies am Dienstverteilerknoten registriert, wobei vom kontrollierten Endgerät eine Übermittlung der überwachungsrelevanten Daten aller dort erfolgenden Kommunikationsvorgänge, insbesondere aller dort eingegebenen Rufnummern oder sonstigen Netzadressierungen an den Dienstverteilerknoten erfolgt.

Durch den Dienststeuerknoten erfolgt eine Verwaltung aller aktivierten Netzdienste innerhalb des Kommunikationsnetzes, wobei der Dienstverteilerknoten die dafür notwendigen Informationen bereitstellt. Ist innerhalb des Dienststeuerknotens das kontrollierte Endgerät in der oben beschriebenen Weise markiert und erfolgt eine unvollständige Übermittlung endgerätseitig eingegebener Rufnummern oder sonstiger Netzadressierungen durch den Dienstverteilerknoten, wird durch den Dienststeuerknoten ein Anforderungssignal an den Dienstverteilerknoten generiert.

Als Reaktion auf dieses Anforderungssignal werden durch den Dienstverteilerknoten die vollständigen Verbindungsdaten des kontrollierten Endgerätes, insbesondere die vollständigen, endgerätseitig aktivierten Rufnummern oder Netzadressen an den Dienststeuerknoten übertragen. Diese können an einem Kontrollterminal ausgegeben werden.

Der Informationsaustausch zwischen Dienstverteilerknoten und Dienststeuerknoten erfolgt in intelligenten Netzen vorzugsweise standardisiert nach einem Intelligent Network Application Protokoll (INAP). Hier erfolgt die erwähnte Anforderungssignalisierung durch ein in diesem Protokoll standardisiertes "COME-AGAIN"-Signal.

Befinden sich mehrere kontrollierte Endgeräte im Kommunikationsnetzwerk oder sind die Kontrollaufgaben oder die sonstige Auslastung des Dienststeuerknotens sehr umfangreich, kann ein einzelner Dienststeuerknoten als Bestandteil eines Dienststeuerzentrums aus mehreren unabhängig voneinander arbeitenden Dienststeuerknoten betrieben werden.

Das Dienststeuerzentrum wird von einem Dienstverwaltungsknoten administriert. Die auszuführenden Kontrolloperationen können von einem einzelnen Dienststeuerknoten innerhalb des Dienststeuerzentrums ausgeführt werden oder je nach einer aktuell vorliegenden Auslastung des Kommunikationsnetzes oder des Dienststeuerzentrums auf die innerhalb des Dienststeuerzentrums angeordneten Dienststeuerknoten verteilt sein.

Weitere Ausgestaltungen des Verfahrens ergeben sich aus den Unteransprüchen. Das erfindungsgemäße Verfahren soll nachfolgend anhand von Anwendungsbeispielen näher erläutert werden. Es werden für gleiche oder gleichwirkende Verfahrensbestandteile die selben Bezugszeichen verwendet. Zur Verdeutlichung dienen die angefügten Abbildungen Figuren.

Diese zeigen im einzelnen:
Fig. 1 einen schematischen Überblick über eine Architektur aus kontrolliertem Endgerät 1, einer Vermittlungsstelle 4 mit einem Dienstverteilerknoten 5, einem Dienststeuerknoten 7 und einem Kontrollterminal 2 in einem intelligenten Netz,
Fig. 2 einen schematischen Überblick über die Architektur aus Dienstverteilerknoten 5, Dienststeuerknoten 7, kontrolliertem Endgerät 1 und Kontrollterminal 2 bei einer temporären Markierung/Speicherung durch einen temporären Überwachungsparameter 7e der dem kontrolliertem Endgerät 1 zugeordneten Netzanschlussdaten 1a in einem intelligenten Netz, und
Fig. 3 einen schematischen Überblick über eine Architektur aus kontrolliertem Endgerät 1, Dienstverteilerknoten 5, und in einem Dienststeuerzentrum 10 zusammengefaßten Dienststeuerknoten 10a, 10b, 10c und 10d mit einem Dienstverwaltungsknoten 11 in einem intelligenten Netz.

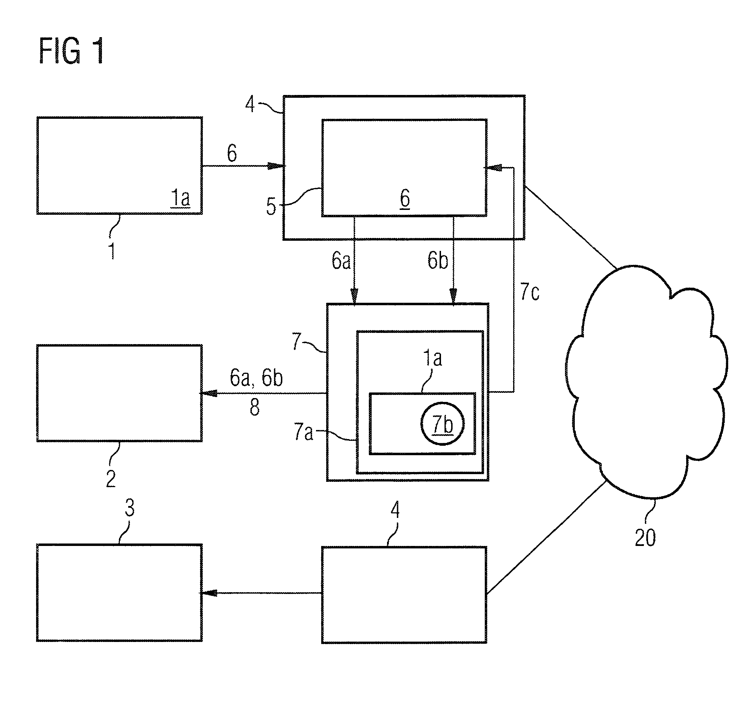

Fig. 1 zeigt in einem schematischen Überblick eine dem erfindungsgemäßen Verfahren zugrundeliegende Minimalarchitektur mit einem Dienstverteilerknoten 5 und einem Dienststeuerknotens 7 in einer übergeordneten Netzwerkarchitektur 20, die als ein intelligentes Netz mit entsprechenden Netzdiensten ausgebildet ist. In einem intelligenten Netzwerk ist der Dienstverteilerknoten als ein für derartige Kommunikationsnetze bekannter Service Switching Point SSP, der Dienststeuerknoten als ein Service Control Point SCP und der Dienstverwaltungsknoten als ein Service Management Point SMP ausgebildet.

Eine Zuordnung der Netzdienste an einzelne Endgeräte innerhalb des Netzes wird durch den Dienstverteilerknoten 5 vorgenommen, der vorzugsweise in einer Vermittlungsstelle 4 lokalisiert ist. Diese kann in einem intelligenten Netz als eine Transitverbindungsstelle ausgeführt sein. Der Dienststeuerknoten 7 führt Operationen zur Steuerung aller abzuarbeitenden Netzdienste innerhalb des intelligenten Netzes aus.

Eine Ausgabe und Speicherung von Resultaten sowie eine Steuerung ausgeführter Kontrollaufgaben bezüglich eines innerhalb des intelligenten Netzes lokalisierten Endgerätes 1 erfolgt an einem Kontrollterminal 2, der über etablierte Übertragungsprotokolle, vorzugsweise X.25 und/oder FTAM, mit einem SCP kommuniziert.

In Fig. 1 ist eine Ausführungsform des erfindungsgemäßen Verfahrens dargestellt, bei welchem die Netzanschlußdaten 1a des kontrollierten Endgerätes 1 permanent neben Netzanschlußdaten anderer Endgeräte in einer dem Dienststeuerknoten 7 zugeordneten Datenbank 7a gespeichert sind. Das Netzanschlußdatum 1a, das dem kontrollierten Endgerät 1 zugeordnet ist, wird innerhalb des Dienststeuerknotens 7 als zu kontrollierend markiert. Hierzu werden in einer internen Datenbankstruktur dem Netzanschlussdatum 1a des kontrollierten Endgerätes als Markierung Überwachungsparameter 7b angefügt, die mit entsprechenden Werten belegt sind. Die Überwachungsparameter umfassen relevante Daten der auszuführenden Kontrollaufgaben, wie Dauer, Art und Umfang der Überwachung, gesondert zu überwachende, vom Endgerät ausgelöste Netzdienste und dergleichen weitere Informationen. Das Netzanschlußdatum 1a besteht mindestens aus einer Rufnummer oder einer sonstigen Adressierung des kontrollierten Endgerätes 1 im intelligenten Netz und erlaubt eine eindeutige Identifizierung des Endgerätes.

Wird am kontrollierten Endgerät 1 eine Rufnummer 6 oder eine anderweitige Netzadressierung eingegeben, erfolgt ein Verbindungsaufbau über eine Vermittlungsstelle 4 zu einem weiteren, an das Netz 20 angeschlossenen Endgerät 3.

Eine Übermittlung der Netzadressierung 6 durch den innerhalb der Vermittlungsstelle 4 lokalisierten Dienstverteilerknoten 5 an den Dienststeuerknoten 7 wird in Abhängigkeit von der Konfiguration des Dienststeuerknotens und den Umfang der zu steuernden Dienste ausgeführt. In der Regel erfolgt zunächst nur eine Übertragung einer unvollständigen bzw. verkürzten Rufnummer/Netzadresse 6a.

Aufgrund der innerhalb der SCP-Datenbank mit einem Überwachungsparameter 7b gesetzten Markierung des Netzanschlußdatums 1a des kontrollierten Endgerätes 1 erfolgt als Reaktion auf eine durch den Dienststeuerknoten 7 registrierten Übermittlung einer unvollständigen bzw. verkürzten Rufnummer/Netzadressierung 6a eine Generierung eines Anforderungssignals 7c. Bei einer in intelligenten Netzwerken üblichen, nach einem Intelligent Network Application Protocol (INAP) standardisierten Kommunikation zwischen dem als Dienststeuerknoten 7 wirkenden SCP und dem als Dienstverteilerknoten 5 arbeitenden SSP ist das Anforderungssignal 7c ein "Come Again"-Signal.

Durch den Dienstverteilerknoten 5 wird daraufhin ein die verkürzte Rufnummer/Netzadresse 6a komplettierender Rufnummern- und/oder Adressbestandteil 6b an den Dienststeuerknoten 7 übermittelt. Unvollständiger Rufnummernbestandteil 6a und komplettierender Rufnummernbestandteil 6b werden innerhalb des Dienststeuerknotens 7 zur vollständigen Rufnummer/Netzadressierung 6 komplettiert und oder getrennt zusammen mit den Ereignisdaten 8 an das Kontrollterminal 2 übermittelt.

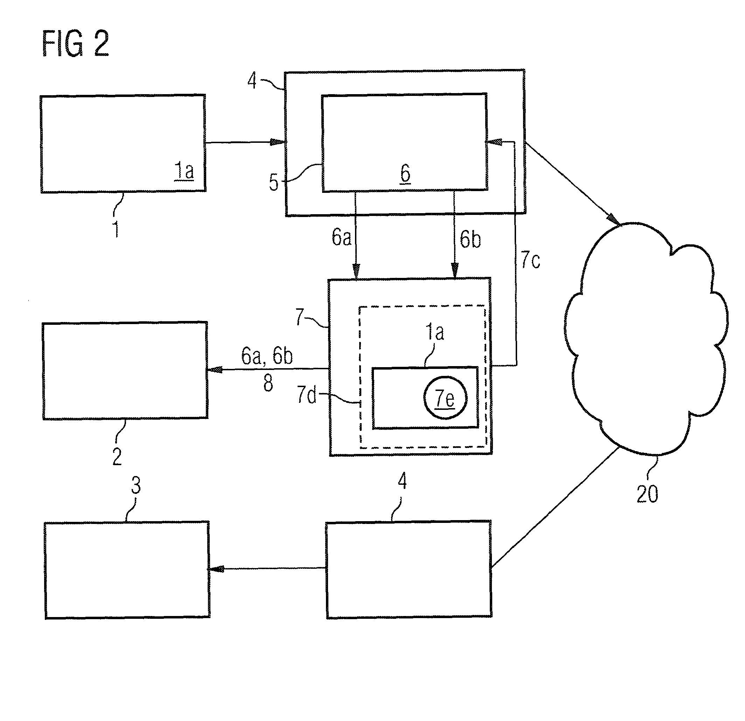

Fig. 2 zeigt schematisch eine dem im vorhergehenden Anwendungsbeispiel vergleichbare Architektur zwischen Dienstverteilerknoten 5 und Dienststeuerknoten 7. Bei diesem Anwendungsbeispiel ist das Netzanschlußdatum des kontrollierten Endgerätes 1 nicht vorab innerhalb des Dienststeuerknotens gespeichert oder dieser weist von vornherein keine interne Datenbank auf. Es ist in diesem Fall nicht feststellbar, daß am kontrollierten Endgerät 1 Kommunikationsverbindungen aufgebaut werden oder andere Eingaben erfolgen.

In diesem Fall wird das Netzanschlußdatum 1a des kontrollierten Endgerätes 1 innerhalb des Dienststeuerknotens 7 in einer temporären Kontroll-Datenbank 7d gespeichert und mit temporären Überwachungsparametern 7e markiert. Der Ablauf der Vervollständigungsoperationen erfolgt in der bereits beschriebenden Weise.

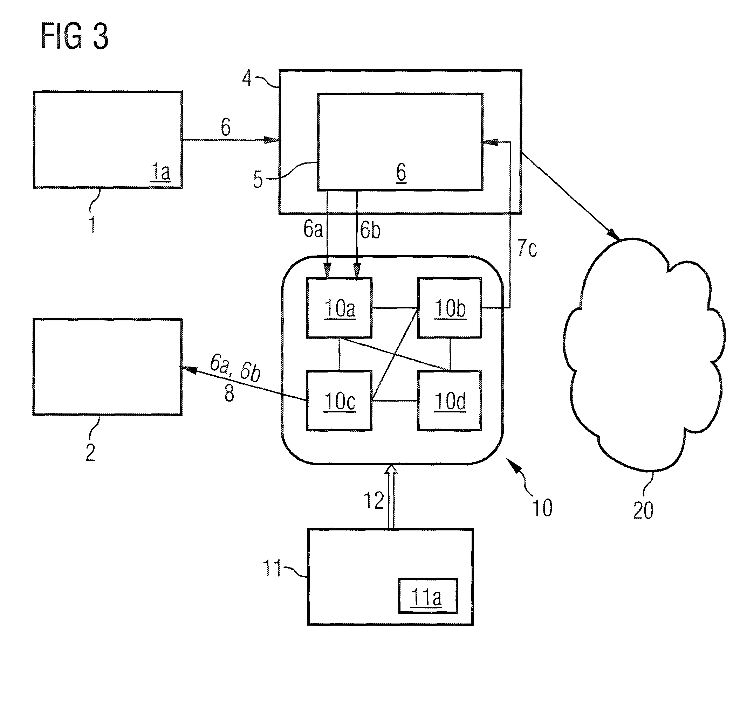

Für intelligente Netzwerke, in denen umfangreiche Kontrollaufgaben, insbesondere für mehrere kontrollierte Endgeräte, anfallen, kann die Leistungsfähigkeit eines einzelnen Dienststeuerknotens 7 durch die abgearbeiteten Kontrollaufgaben in beträchtlichem Maße sinken. In diesem Fall ist an Stelle eines einzelnen Dienststeuerknotens 7 ein Dienststeuerzentrum 10 vorgesehen, in welchem eine Reihe von Dienststeuerknoten 7 parallel zueinander Steuervorgänge ausführen. Dies ist in Fig. 3 schematisch dargestellt. Die Konfiguration und Administration 12 des Dienststeuerzentrums 10 erfolgt durch einen Dienstverwaltungsknoten 11. Der Dienstverwaltungsknoten 11 ist hierzu mit einer Dienstentwicklungsumgebung 11a ausgestattet, welches als softwareartiges Frontend eine einfache Verwaltung des Dienststeuerzentrums 10 ermöglicht.

In intelligenten Netzen ist der Dienstverwaltungsknoten in der bekannten Weise eines Service Management Points (SMP) ausgebildet, während das softwareartige Frontend als ein Service Creation Environment (SCE) ausgeführt ist.

Ist die Anzahl der kontrollierten Endgeräte im Netzwerk groß, können die bereits genannten Übermittlungs/Vervollständigungsvorgänge entweder auf einen untergeordneten Dienststeuerknoten konzentriert werden, wobei die verbleibenden Dienststeuerknoten innerhalb des Dienststeuerzentrums andere Netzdienste ausführen.

Innerhalb des Dienststeuerzentrums kann auch der Ablauf des oben beschriebenen Vervollständigungsverfahrens auf mehrere untergeordnete Dienststeuerknoten 10a,...,10d verteilt sein. Insbesondere können die untergeordneten Dienststeuerknoten als Empfangs- oder Sendeschnittstellen des Dienststeuerzentrums ausgebildet sein. In Fig. 3 ist beispielhaft ein untergeordneter Dienststeuerknoten als Empfangsknoten 10a für den Empfang von Informationen eingerichtet, die vom Dienstverteilerknoten 5 an das Dienststeuerzentrum 10 übertragen werden.

Ein weiterer untergeordneter Dienststeuerknoten ist als Sendeknoten 10b für das Senden von Informationen aus dem Dienststeuerzentrum 10 zum Dienstverteilerknoten 5 vorgesehen.

Rufnummern/Netzadressen werden in diesem Anwendungsbeispiel am Empfangsknoten 10a vom Dienstverteilerknoten 5 entgegengenommen, wobei das bereits erwähnte Anforderungssignal am Sendeknoten 10b ausgelöst wird. Ein der Kommunikation zwischen Dienststeuerzentrum und Kontrollterminal 2 zugeordneter Überwachungsknoten 10c führt die Weiterleitungsoperationen der Rufnummernbestandteile an das Kontrollterminal aus.

## Patentansprüche

1. Verfahren zur Sicherung von Kontrollanforderungen bei Kommunikationsverbindungen,
**dadurch gekennzeichnet, dass**
im Ansprechen auf eine unvollständig erfolgte Übermittlung von Ereignisdaten durch einen Dienstverteilerknoten (5) an einen Dienststeuerknoten (7) bei einer von einem, **in dem** Dienststeuerknoten als **zu** überwachendes **Endgerät ausgewiesenen,** kontrollierten Endgerät (1) aufgebauten Kommunikationsverbindung in einem Kommunikationsnetz, **eine Rückmeldung des Dienststeuerknotens an den Dienstverteilerknoten erfolgt und** eine auf Netzanschlussdaten des kontrollierten Endgerätes sensitive Vervollständigungsprozedur zwischen Dienstverteilerknoten und Dienststeuerknoten ausgeführt wird.

2. Verfahren nach Anspruch 1,
**dadurch gekennzeichnet, daß**
die Ereignisdaten (8) die vom kontrollierten Endgerät (1) aktivierte Rufnummer oder dergleichen weitere Netzadresse (6) als zu vervollständigende Bestandteile beinhalten.

3. Verfahren nach Anspruch 1 oder 2,
**dadurch gekennzeichnet, daß**
bei Vorhandensein einer dem Dienststeuerknoten zugeordneten und Netzanschlussdaten von Endgeräten umfassenden permanenten Datenbank (7a) ein Überwachungsparameter (7b) den Netzanschlußdaten (1a) des kontrollierten Endgerätes (1) als Markierung des auszuführenden Kontrollvorgangs zugeordnet werden.

4. Verfahren nach Anspruch 1 oder 2,
**dadurch gekennzeichnet, daß**
bei Nichtvorhandensein einer dem Dienststeuerknoten zugeordneten permanenten Datenbank eine temporäre Markierung des kontrollierten Endgerätes durch ein Erstellen einer temporären Kontrolldatenbank (7d) und eine Zuordnung temporärer Überwachungsparameter (7e) während der Ausführung der Kontrollaufgaben erfolgt.

5. Verfahren nach Anspruch 3 oder 4,
**dadurch gekennzeichnet, daß**
ein Setzen und/oder eine Verwaltung des Überwachungsparameters (7b) und/oder des temporären Überwachungsparameters (7e) an einem dem Dienststeuerknoten (7) zugeordneten und diesen administrierenden Dienstverwaltungsknoten (11) ausgeführt wird.

6. Verfahren nach einem der vorhergehenden Ansprüche,
**dadurch gekennzeichnet, daß**
bei einem Empfang eines durch den Dienstverteilerknoten (5) übermittelten unvollständigen Bestandteiles (6a) einer Netzadresse (6) am Dienststeuerknoten (7) ein Anforderungssignal (7c) generiert und an den Dienstverteilerknoten übermittelt wird, welches am Dienstverteilerknoten eine Übermittlung eines den unvollständigen Bestandteil (6a) der Rufnummer oder Netzadresse komplettierenden zusätzlichen Bestandteiles (6b) der Netzadresse (6) auslöst.

7. Verfahren nach Anspruch 6,
**dadurch gekennzeichnet, daß**
das Anforderungssignal (7c) in einem intelligenten Netz durch ein im Rahmen des INAP-Protokolls für derartige Netze standardisierten "Come Again"-Signal gebildet ist.

8. Verfahren nach einem der vorhergehenden Ansprüche,
**dadurch gekennzeichnet, daß**
eine Markierung durch einen Überwachungsparameter (7b) in Verbindung mit einem nach INAP standardisierten "Come-Again"-Signal zur Modifizierung eines Indirect-Access-Dienstes (IAS-Dienst) in einem intelligenten Netzwerk angewendet wird.

9. Verfahren nach einem der Ansprüche 4 bis 8,
**dadurch gekennzeichnet, daß**
eine temporäre Markierung mittels eines temporären Überwachungsparameters (7e) in Verbindung mit einem nach INAP standardisierten "Come-Again"-Signal insbesondere zur Modifizierung eines Virtual-Private-Network-Dienstes (VPN-Dienst) in einem intelligenten Netzwerk angewendet wird.

10. Verfahren nach einem der vorhergehenden Ansprüche,
**dadurch gekennzeichnet, daß**
der Dienststeuerknoten (7) wahlweise innerhalb eines Dienststeuerzentrums (10) integriert ist, welches aus unabhängig voneinander operierenden untergeordneten Dienststeuerknoten (10a, 10b,...) besteht und durch den Dienstverwaltungsknoten (11) zentral administriert wird, wobei eine Dienstelogik so ausgestaltet ist, daß die Kontroll- und/oder Vervollständigungsprozeduren auf einen der untergeordneten Dienststeuerknoten (10a, 10b, ...) des Dienststeuerzentrums (10) konzentriert oder über die einzelnen untergeordneten Dienststeuerknoten verteilt zugewiesen sind.

## Claims

1. Method for securing control requests for communication links,
**characterized in that**,
in response to incomplete transmission of event data by a service distribution node (5) to a service control node (7) on a communication link set up by a controlled terminal (1) in a communication network, which terminal has been identified in the service control node as a terminal which is to be monitored, the service control node reports back to the service distribution node and a completion procedure which is sensitive to network connection data for the controlled terminal is executed between the service distribution node and the service control node.

2. Method according to Claim 1,
**characterized in that**
the event data (8) comprise the call number or other such network address (6) activated by the controlled terminal (1) as parts which are to be completed.

3. Method according to Claim 1 or 2,
**characterized in that**
the presence of a permanent database (7a) which is associated with the service control node and comprises network connection data for terminals prompts a monitoring parameter (7b) to be assigned to the network connection data (1a) for the controlled terminal (1) as a marker for the control process which is to be carried out.

4. Method according to Claim 1 or 2,
**characterized in that**
the absence of a permanent database associated with the service control node prompts temporary marking of the controlled terminal through the creation of a temporary control database (7d) and assignment of temporary monitoring parameters (7e) during execution of the control tasks.

5. Method according to Claim 3 or 4,
**characterized in that**
the monitoring parameter (7b) and/or the temporary monitoring parameter (7e) is set and/or managed at a service management node (11) which is associated with the service control node (7) and administers it.

6. Method according to one of the preceding claims,
**characterized in that**
reception of an incomplete part (6a) of a network address (6) transmitted by the service distribution node (5) at the service control node (7) prompts generation of a request signal (7c) which is transmitted to the service distribution node and, at the service distribution node, triggers transmission of an additional part (6b) of the network address (6) which completes the incomplete part (6a) of the call number or network address.

7. Method according to Claim 6,
**characterized in that**
the request signal (7c) is formed in an intelligent network by a "Come Again" signal standardized for such networks within the context of the INAP protocol.

8. Method according to one of the preceding claims,
**characterized in that**
marking by a monitoring parameter (7b) in connection with a "Come Again" signal standardized on the basis of INAP is used to modify an indirect access service (IAS service) in an intelligent network.

9. Method according to one of Claims 4 to 8,
**characterized in that**
temporary marking using a temporary monitoring parameter (7e) in connection with a "Come Again" signal standardized on the basis of INAP is used, in particular, to modify a virtual private network service (VPN service) in an intelligent network.

10. Method according to one of the preceding claims,
**characterized in that**
the service control node (7) is optionally integrated within a service control centre (10) which comprises subordinate service control nodes (10a, 10b,...) operating independently of one another and is administered centrally by the service management node (11), with a service logic unit being in a form such that the control and/or completion procedures are concentrated on one of the subordinate service control nodes (10a, 10b,...) in the service control centre (10) or are assigned in a distribution over the individual subordinate service control nodes.

## Revendications

1. Procédé pour la sécurisation de demandes de contrôle dans des connexions de communication,
**caractérisé en ce**
**qu'**en réponse à une transmission de données d'événements à un noeud de commande de service (7), réalisée de manière incomplète au moyen d'un noeud de distribution de service (5) dans une connexion de communication dans un réseau de communication, établie par un terminal contrôlé (1) identifié comme terminal à contrôler dans le noeud de commande de service, une information en retour du noeud de distribution de service est effectuée au noeud de distribution de service et une procédure de complémentation sensible à des données de connexion au réseau du terminal contrôlé est exécutée entre le noeud de distribution de service et le noeud de commande de service.

2. Procédé selon la revendication 1,
**caractérisé en ce que**
les données d'événements (8) contiennent le numéro d'appel activé par le terminal contrôlé (1) ou une autre adresse de réseau similaire (6) comme composants à compléter.

3. Procédé selon la revendication 1 ou 2,
**caractérisé en ce qu'**
en cas de présence d'une banque de données (7a) permanente, affectée au noeud de commande de service et comprenant des données de connexion au réseau de terminaux, un paramètre de contrôle (7b) est affecté aux données de connexion au réseau (1a) du terminal contrôlé (1) comme marquage de l'opération de contrôle à exécuter.

4. Procédé selon la revendication 1 ou 2,
**caractérisé en ce**
**qu'**en cas de non-présence d'une banque de données permanente affectée au noeud de commande de service, un marquage temporaire du terminal contrôlé est réalisé par l'établissement d'une banque temporaire de données de contrôle (7d) et par une affectation de paramètres de contrôle temporaires (7e) pendant l'exécution des tâches de contrôle.

5. Procédé selon la revendication 3 ou 4,
**caractérisé en ce**
**qu'**une mise et/ou une gestion du paramètre de contrôle (7b) et/ou du paramètre de contrôle temporaire (7e) est exécutée sur un noeud de gestion de service (11) affecté au noeud de commande de service (7) et administrant celui-ci.

6. Procédé selon l'une quelconque des revendications précédentes,
**caractérisé en ce que**
lors d'une réception sur le noeud de commande de service (7) d'un composant incomplet (6a) d'une adresse de réseau, transmis au moyen du noeud de distribution de service (5), un signal de demande (7c) est généré et transmis au noeud de distribution de service, lequel déclenche sur le noeud de distribution de service une transmission d'un composant (6b) supplémentaire de l'adresse de réseau (6) complétant le composant incomplet (6a) du numéro d'appel ou de l'adresse de réseau.

7. Procédé selon la revendication 6,
**caractérisé en ce que**
le signal de demande (7c) est formé dans un réseau intelligent au moyen d'un signal « Come Again » normalisé pour de tels réseaux dans le cadre du protocole INAP.

8. Procédé selon l'une quelconque des revendications précédentes,
**caractérisé en ce**
**qu'**un marquage au moyen d'un paramètre de contrôle (7b) est utilisé en relation avec un signal « Come Again » normalisé suivant INAP pour la modification d'un Indirect Access Service (service IAS) dans un réseau intelligent.

9. Procédé selon l'une quelconque des revendications 4 à 8,
**caractérisé en ce**
**qu'**un marquage temporaire est utilisé au moyen d'un paramètre de contrôle (7e) temporaire en relation avec un signal « Come Again » normalisé suivant INAP, notamment pour la modification d'un Virtual Private Network Service (service VPN) dans un réseau intelligent.

10. Procédé selon l'une quelconque des revendications précédentes,
**caractérisé en ce que**
le noeud de commande de service (7) est intégré au choix dans un centre de commande de service (10), lequel est constitué de noeuds de commande de service secondaires (10a, 10b, ...), opérant indépendamment les uns des autres et **en ce qu'**il est administré de manière centrale au moyen du noeud de gestion de service (11), une logique de service étant exécutée de telle manière que les procédures de contrôle et/ou de complémentation sont affectées en étant concentrées sur l'un des noeuds de commande de service secondaires (10a, 10b, ...) du centre de commande de service (10) ou de manière répartie, par l'intermédiaire de chacun des noeuds de commande de service secondaires.
